# EUROPEAN PATENT SPECIFICATION

(11) **EP 0 991 518 B1**
(45) Date of publication and mention of the grant of the patent: **06.02.2002**
(21) Application number: 98936369.2
(22) Date of filing: 10.06.1998
(51) Int. Cl.: B32B 15/04, F16C 33/20

(54) **A LAMINATED SLIDING MEMBER AND A METHOD FOR THE PRODUCTION THEREOF**
MEHRSCHICHTGLEITTEIL UND VERFAHREN ZU DESSEN HERSTELLUNG
ELEMENT COULISSANT STRATIFIE ET SON PROCEDE DE FABRICATION

(30) Priority: 17.06.1997 JP 17513597; 18.02.1998 JP 5127698
(43) Date of publication of application: 12.04.2000
(73) Proprietor: Twaron Products B.V., 6827 AV Arnhem (NL)
(72) Inventor: YAMABAYASHI, Toshiharu, Tsukuba, Ibaraki 305 (JP); ASAGI, Kosaku, Tsukuba, Ibaraka 305 (JP)
(74) Representative: Fett, Günter
(86) International application number: EP9803710
(87) International publication number: WO9857803

(56) References cited:
- WO-A-97/06204
- DE-A- 2 935 205
- GB-A- 2 279 998
- DATABASE WPI Section Ch, Week 9437 Derwent Publications Ltd., London, GB; Class A32, AN 94-299888 XP002079299 & JP 06 228329 A (NTN CORP) , 16 August 1994

## Description

The present invention relates to a laminated sliding member which can be used, for example, as a bearing or bush for various industrial apparatuses, and a method for the production thereof.

The basic structure of a laminated sliding member is a three-layer structure consisting of a sliding layer formed by ethylene tetrafluoride resin, etc., a bronze layer, and a base metal, for example as disclosed in Japanese Patent Laid Open No. 1977-24907. Conventional technical development has dealt mainly with improvement of the sliding layer in connection with friction and wear property, and with economical methods for producing it. For example, according to Japanese Patent Laid Open No. 1987-266223, a tape with a polymer consisting of polyether ether ketone, polytetrafluoroethylene, graphite, and bronze is produced by melt extrusion, while bronze powder is sintered on a base metal to produce an intermediate layer. Said tape is bonded onto the intermediate layer by a roll mill. However, the sliding layer formed by the high polymer content tape obtained by melt extrusion suffers from the problem that it cannot be used in high speed and high load sliding conditions because it has low heat resistance. According to Japanese Patent Laid Open No. 1994-200280, a wet, lubricating composition produced by using a petroleum solvent is sprayed onto a porous sintered metal, and the solvent is removed from the composition to obtain a laminated sliding material. In the case of this method, the working environment deteriorates as a result of the solvent used, and large-scale equipment is needed to collect the solvent, etc. In Japanese Patent Publication No. 1979-21498 and Japanese Patent Laid Open No. 1994-228329, a two-layer sliding material with a sliding surface containing aromatic polyamide fibers was disclosed, but it has the problem that since the aromatic polyamide fibers are used as a woven fabric, it is not easy to fill the clearances between the fibers with a solid lubricant.

Moreover, while sliding material containing aromatic polyamide fibers is bonded to a metallic substrate by an epoxy resin, etc., sliding material using such an adhesive has the problem that, depending on the service environment, its durability seriously declines. It is known to etch a sliding layer using sodium metal, to ensure bonding between the sliding layer containing ethylene tetrafluoride resin, etc. and a metallic substrate. However, if sodium metal is used, there are practical problems regarding economy and environment. For these reasons, it is desired to make a laminated sliding material with good slidability by an economical method.

JP-A-9 188 767 (corresponding to WO-A-9 706 204) discloses a sliding material obtained by laminating sheets composed of an aromatic polyamide pulp and a fluororesin. Although it shows good friction property, a lower wear loss is desired.

The object of the present invention is to provide a laminated sliding member having a lubricating layer composed of an aromatic polyamide and a fluororesin.

The present invention is as follows:
(1) A laminated sliding member, which has a base metal and a lubricating layer bonded to the base metal and which contains an aromatic polyamide and a fluororesin, characterized in that the aromatic polyamide is a pulp with a BET surface area of 3 to 25 m²/g and makes up 10 to 70 wt.% of the lubricating layer, based on the weight of the lubricating layer.
(2) A laminated sliding member as set forth at (1) above, wherein the lubricating layer containing an aromatic polyamide pulp and the fluororesin is a sheet obtained by a papermaking process wherein the aromatic polyamide pulp and the fluororesin are removed from an aqueous dispersion.
(3) A laminated sliding member as set forth above wherein the lubricating layer containing the aromatic polyamide pulp and the fluororesin further contains 0.5 to 25 wt.% of one or more compounds selected from carbon, molybdenum disulfide, bronze, boron nitride, and low-molecular weight fluororesin
(4) A method of producing the above-mentioned laminated sliding member comprising the following steps (a) through (c):
   (a) destabilizing a fluororesin powder with a coagulant in an aqueous dispersion of an aromatic polyamide pulp and the fluororesin powder, in order to deposit the fluororesin powder on the aromatic polyamide pulp,
   (b) removing the aromatic polyamide pulp with the fluororesin powder deposited thereon by means of a papermaking process, followed by drying to form a sheet, and
   (c) pressure-bonding the sheet and a base metal, and heating this to a temperature higher than the melting point of the fluororesin.

If the aromatic polyamide resin is used as a raw material of the aromatic polyamide pulp in the present invention, at least 85 mol% of the amide bonds of the resin are obtained from an aromatic diamine and an aromatic dicarboxylic acid.
The aromatic polyamide resins which can be used in the present invention are, for example,
polyparaphenylene terephthalamide, polymetaphenylene terephthalamide, polyparabenzamide, poly-4,4'-diaminobenzanilide, polyparaphenylene-2,6-naphthalic amide, copolyparaphenylene/4,4'-(3,3'-dimethylbiphenylene)terephthalamide, copolyparaphenylene/2,5-pyridylene terephthalamide, polyorthophenylene phthalamide, polymetaphenylene phthalamide, polyparaphenylene phthalamide, polyorthophenylene isophthalamide, polymetaphenylene isophthalamide, polyparaphenylene isophthalamide, polyorthophenylene terephthalamide, poly-1,5-naphthalene phthalamide, poly-4,4'-diphenylene orthophthalamide, poly-4,4'-diphenylene isophthalamide, poly-1,4-naphthalene phthalamide, poly-1,4-naphthalene isophthalamide, poly-1,5-naphthalene isophthalamide, etc., aromatic polyamides containing alicyclic amines such as compounds in which the benzene nuclei of the aromatic diamines are partially substituted by piperazine, 1,5-dimethylpiperazine or 2,5-diethylpiperazine, aromatic copolymers of aromatic polyamides in which the aromatic diamines contain, respectively, two phenyl groups bonded by an ether bond such as 8,3'-hydroxydiphenylene diamine or 3,4-hydroxydiphenylene diamine, or a group such as -S-, -SO₂-, -CO-, or -NH-, such as poly-8,8'-hydroxydiphenylene terephthaiamide/polyparaphenylene terephthalamide copolymer and poly-3,4-hydrodiphenylene terephthalamide/polyparaphenylene terephthalamide copolymer, etc.

The aromatic polyamide pulp used in the present invention refers to the highly fibrillated fibers of any of the aromatic polyamide resins. As an indicator of fibrillation the BET specific surface area is often used. The BET specific surface area suitable in the present invention is 3 to 25 m²/g. A preferable range is 4 to 20 m²/g, and a more preferable range still is 5 to 16 m²/g. If the BET specific surface area of the pulp is smaller than 3 m²/g, the fibers are not entangled enough, and as a result, the slidability declines. If the specific surface area is larger than 25 m²/g, the freeness inevitably becomes poor, requiring a longer time for sheet formation and thus being uneconomical.
The fluororesins which can be used in the present invention include, for example, ethylene tetrafluoride resin (hereinafter also called PTFE), polytetrafluoroethylene/perfluororalkylvinylether copolymer (hereinafter also called PFA), polytetrafluororethylene/hexafluoropropylene copolymer resin (hereinafter also called FEP), ethylene/tetrafluoroethylene copolymer (hereinafter also called ETFE), polyvinylidenefluoride (hereinafter also called PVDF), polychlorortrifluororethylene (hereinafter also called PCTFE), etc. In view of heat resistance, slidability, etc., PTFE is especially preferable. It is preferred that the average particle size of the fluororesin is 0.01 to 10 µm, and a more preferable range is 0.1 to 1 µm. If the particle size is smaller than 0.01 µm, it is difficult for the particles to be deposited on the fiber surfaces, and if it is larger than 10 µm, it is difficult to obtain a stable dispersion.

To further enhance the slidability, a third ingredient such as carbon, molybdenum disulfide, bronze, boron nitride or low-molecular weight fluororesin can be added to the lubricating layer. Low-molecular weight fluororesin means a fluororesin lower in molecular weight than the fluororesin which is the main matrix of the sheet. For example, if the molecular weight of the fluororesin which is the main matrix of the sheet is one million or more, the molecular weight of the low-molecular weight fluororesin used as the third ingredient should be less than one million, more particularly less than 300,000. The fluororesin which is the main matrix of the sheet is not required to be of the same type as the low-molecular weight fluororesin, but to improve the heat resistance of the lubricating layer in the laminated sliding material it is preferable that both fluororesins are PTFE.
If the third ingredient is particles, it is preferable that the average particle size is 50 µm or less, though it depends on the sliding conditions of the final product such as a bearing. More preferable the particle size is 25 µm or less, and more preferable still is 5 µm or less. If the average diameter is larger than 50 µm, not only the lowering of sliding properties is likely to occur, but a sheet made from these constituents is likely to have a lower strength and becomes difficult to adhere to the metal base. If the third ingredient is fibers, it is preferable that the fibers have a diameter of 50 µm or less and a length of 20 mm or less. If the diameter is larger than 50 µm or the length is longer than 20 mm, it is difficult to disperse the fibers homogeneously (uniformly) in water, and it is difficult to obtain a uniform sheet. The amount of third ingredient added to the lubricating layer is 0.5 to 25 wt.%. A preferable range is 1 to 15 wt.%, and a more preferable range is 2 to 10 wt.%. If the amount is smaller than 0.5 wt.%, the improving effect on the slidability will not be sufficiently manifested, and if it is larger than 25 wt.%, the strength of the sheet obtained will decline even when the third ingredient is homogeneously dispersed, making it difficult to bond the sheet to the base metal by pressure-bonding.
The amount of aromatic polyamide pulp added is 10 to 70 wt.%, based on the weight of the lubricating layer, and is selected depending on the final product. If the amount of aromatic polyamide pulp is less than 10 wt.%, the heat resistance declines, and as a result, the wear loss increases under high speed and high load sliding conditions. If the amount of aromatic polyamide pulp is larger than 70 wt.%, the bonding of the sheet to the base metal is insufficient, making it difficult to produce the laminated sliding member. The amount of fluororesin preferably is 5 to 90 wt.%, based on the weight of the lubricating layer.

In the present invention, the base metal can be selected from carbon steels for machine structural use, alloy steels for machine structural use, stainless steels, heat resistant steels, super alloys, tool steels, spring steels, free-cutting steels, clad steels, bearing steels, castings, forgings, copper alloys, aluminum alloys, etc. used for ordinary bearings, bushes, etc. A plated metal can also be used as required.

To improve the adhesiveness between the base metal and the lubricating layer, it is preferable to roughen the surface of the base metal. This can be achieved, for example, by blasting according to the method for roughening base metal surfaces given in JIS H 9300, etc., or by spraying a copper alloy such as bronze or an alloy containing lead, tin or zinc, etc., onto the base metal, to form a porous metallic layer, but the present invention is not limited to or by these methods.

In step (a) in the process for producing a laminated sliding member of the present invention, the concentration of aromatic polyamide pulp in the dispersion can be selected freely. However, for economy's sake, it is preferred to select as high a concentration as possible so long as the flowability of the dispersion is not impaired. The aromatic polyamide pulp can be dispersed by any conventional method used for making paper from wood pulp. For example, any one of various pulpers, beaters such as Niagara beater, refiners such as single disc refiners, etc. can be used for preparing the dispersion. To make a dispersion containing the third ingredient as well, it is preferable to prepare aqueous dispersions containing a fluororesin powder and a third ingredient, respectively, and then mix them with an aqueous dispersion of an aromatic polyamide pulp. The dispersions (which may also be called emulsions, etc.) containing a fluororesin powder or a third ingredient are prepared by stable dispersion of a fluororesin powder or a third ingredient in water containing an anionic, cationic or nonionic surfactant. The dispersion of a fluororesin powder can also be prepared by polymerizing a monomer as a raw material of the fluororesin in water, generally in the presence of one or more surfactants. Besides, a commercialized dispersion of fluororesin powder can also be used as it is. Such an aqueous dispersion of fluororesin powder can be selected, for example, from fluororesin dispersions sold by Asahi Glass Co., Ltd., Daikin Industries, Ltd., etc. Also, as the third ingredient an aqueous carbon dispersion, molybdenum disulfide aqueous dispersion or boron nitride aqueous dispersion, etc. sold by Nippon Kokuen Kogyo KK, etc. can be used as it is. A coagulant acts to destabilize the dispersion of the fluororesin powder and the third ingredient in water, to deposit the fluororesin powder and the third ingredient on the aromatic polyamide pulp fiber surfaces. The kind and quantity of coagulant applied are based on the surfactants used for dispersing the fluororesin powder and the third ingredient and the specific surface area of the aromatic polyamide pulp.

For example, if the fluororesin powder and the third ingredient are stabilized by a nonionic surfactant, the coagulant can be a strong electrolyte and/or a high-molecular coagulant such as a polyacrylamide based coagulant. Regardless of the surfactant used, it is especially effective to use a condensation product between a polyhydroxy aromatic carboxylic acid and a glucose, together with a polyvalent metal salt as the coagulant. As the condensation product are mentioned tannic acid, garlic acid, etc. As the metal salt, enumerated are aluminum sulfate, calcium chloride, etc. In this case, for depositing substantially all the fluororesin powder and the third ingredient on the pulp it is effective to add an alkali ingredient such as calcium hydroxide, ammonia, or sodium aluminate to the mixture in order to keep the pH of the mixture in a range of 3.5 to 6.0.
In the present invention, it is important to prepare a lubricating layer with a fluororesin powder and a third ingredient densely and uniformly deposited thereon by optimum combining of an aromatic polyamide pulp, fluororesin powder, third ingredient, and coagulant. In this regard, it is appropriate that the BET specific surface area of the aromatic polyamide pulp is 3 to 25 m²/g. A more preferable range is 4 to 20 m²/g, and an even more preferable range is 5 to 16 m²/g. In step (b), the aromatic polyamide pulp with a fluororesin powder and a third ingredient deposited thereon is made by a conventional papermaking process, to form a sheet, and the sheet is dewatered as required, and dried. In the case of the method of the present invention, a Fourdrinier paper machine or a cylinder paper machine generally used for papermaking can be used as it is.

A press can be used for the pressure contact bonding of the base metal and the sheet, but in view of higher productivity, it is preferable to use rolls. For example, the sheet and the base metal are bonded by pressure contact using rolls, and the laminate is heated to higher than the melting point of the fluororesin to melt the sheet layer destined to be a sliding surface. The linear pressure for pressure contact bonding preferably is 400 to 2000 kgf/cm when the roll temperature is close to room temperature. If the linear pressure is less than 400 kgf/cm, bonding between the base metal and the sheet is insufficient, and if the linear pressure is greater than 2000 kgf/cm, the surface of the bonded sheet is wrinkled. To decrease the linear pressure required for pressure contact bonding it is effective to heat the surfaces of the rolls during the pressure contact bonding.

The laminated material obtained by pressure contact bonding can be melted in an oven with a temperature higher than the melting point of the fluororesin, by batch operation. Alternatively, the sheet with the base metal bonded by pressure contact at a temperature higher than the melting point of the fluororesin can also be melted together with the base metal by heating rolls having a temperature higher than the melting point of the fluororesin. A further method is for the dried sheet together with the base metal to be directly fed through heating rolls having a temperature higher than the melting point of the fluororesin, to simultaneously achieve pressure contact bonding and melting. As a still further method, the base metal can be heated to a temperature higher than the melting point of the fluororesin, the sheet can be superimposed on it, and then the laminate can be passed through rolls to achieve pressure contact bonding and melting.
The present invention is described below in more detail based on examples, but is not limited thereto or thereby.

### Examples

In the examples, the friction and wear property was measured according to the method described below.

### "Physical property evaluation method"

### 1. Friction and wear test

Testing machine: Ring-on-disc vertical-friction and wear testing machine (produced by Takachiho Seiki)
Test piece (flat sheet): 30 mm x 30 mm
Counterpart material: Carbon steel S55C with an outer diameter of 25.6 mm, an inner diameter of 20.0 mm, and a height of 15.0 mm
Pressure: 50 kgf/cm²
Speed: 24 m/min
PV = 1200
Testing time: 24 hours

### Example 1

12.5 g, being the absolute dry weight, of a para-aromatic polyamide pulp (brand: Twaron 1094 produced by Nippon Aramid YK, having a BET specific surface area of 12.9 m²/g and a weight average fiber length of 1.5 mm) and 1906 g of water were uniformly dispersed using a home-use mixer. Moreover, 31.25 g of a PTFE dispersion (brand: Fluon Dispersion AD1 produced by Asahi Glass Co., Ltd., having a PTFE molecular weight of more than one million, an average particle size of 0.25 µm, and a solid content of 60%) were added to the para-aromatic polyamide pulp dispersion, and the mixture was sufficiently stirred. To the mixture were added 30 g of an aqueous solution containing 3 wt.% of tannic acid and 2 wt.%, of aluminum sulfate and 20 g of a 1-wt.% sodium aluminate aqueous solution, to achieve a tannic acid concentration of 450 ppm and an aluminum sulfate concentration of 300 ppm. The mixture was stirred for 10 minutes to deposit the high-molecular PTFE on the aromatic polyamide pulp fiber surfaces. A sheet was formed from the mixture on a 250 mm square wire cloth, using a square sheet machine (produced by Kumagaya Riki KK), and dewatered and dried, to obtain a sheet with a composition ratio of aromatic polyamide pulp/fluororesin of 40/60.
A 3.4 mm thick carbon steel (S45C) sheet (blasted using a #240 steel grid, center line average roughness Ra = 14.4 µm, maximum height Rmax = 188.3 µm, 10-point average roughness Rz = 148.1 µm) was used as the base metal. The above sheet and the base metal were superimposed, bonded by roll at a linear pressure of 900 kgf/cm at room temperature, and sintered in the 380°C nitrogen atmosphere for 1 hour, to obtain a laminated sliding material with a sliding layer of about 0.3 mm in thickness. The laminated sliding material was straightened by rolls again, and subjected to the friction and wear test. The coefficient of the dynamic friction of the laminated sliding material was 0.10, and the wear loss was 40 µm. The wear coefficient was 2.4 x 10⁻⁵ mm/kgf/cm² ·km.

### Example 2

As described in Example 1, a sheet with a composition ratio of aromatic polyamide pulp/fluororesin of 40/60 was prepared, and a 3.4 mm thick phosphor-bronze (C5212) sheet (blasted using a #240 steel grid, center line average roughness Ra = 19.7 µm, maximum height Rmax = 242.5 µm, 10-point average roughness Rz = 185.6 µm) was prepared as the base metal. The sheet and the base metal were superimposed, bonded by roll pressure contact at a linear pressure of 900 kgf/cm at room temperature, and sintered in the 380°C nitrogen atmosphere for 1 hour, to obtain a laminated sliding material with a lubricating layer of about 0.3 mm in thickness. The laminated sliding material was straightened by rolls again and subjected to the friction and wear test. The coefficient of the dynamic friction of the laminated sliding material was 0.08, and the wear loss was 23 µm. The wear coefficient was 1.3 x 10⁻⁵ mm/kgf/ cm² ·km.

### Example 3

12.5 g, being the absolute dry weight, of a para-aromatic polyamide pulp (brand: Twaron 1094 produced by Nippon Aramid YK, with a BET specific surface area of 12.9 m²/g and a weight average fiber length of 1.5 mm) and 1791 g of water were uniformly dispersed using a home-use mixer. Also, 31.25 g of a PTFE dispersion (brand: Fluon Dispersion ADI produced by Asahi Glass Co., Ltd., having a PTFE molecular weight of more than one million, an average particle size of 0.25 µm, and a solid content of 60%) were dispersed in 125 g of water, and 3.13 g of low-molecular PTFE (brand: Fluon Bricant L181J produced by Asahi Glass Co., Ltd., having a PTFE molecular weight of less than 100,000 and an average particle size of 20 µm) were added. The mixture was stirred by a stirrer for 30 minutes, to prepare a dispersion with the high-molecular PTFE powder and the low-molecular PTFE powder uniformly dispersed. It was added to said para-aromatic polyamide pulp dispersion, and the mixture was sufficiently stirred. To it, 30 g of an aqueous solution containing 3 wt.% of tannic acid and 2 wt.% of aluminum sulfate and 7.5 g of a 1-wt.% aqueous ammonia solution were added, to achieve a tannic acid concentration of 450 ppm and an aluminum sulfate concentration of 300 ppm. The mixture was stirred for 10 minutes to deposit the high-molecular PTFE and the low-molecular PTFE on the aromatic polyamide pulp fiber surfaces. A sheet was formed from the mixture on a 250 mm square wire cloth, using a square sheet machine (produced by Kumagaya Riki KK), and dewatered and dried, to obtain a sheet with a composition ratio of aromatic polyamide pulp/high-molecular weight PTFE/low-molecular weight PTFE of 36/55/9. A 3.4 mm thick carbon steel (S45C) sheet (blasted using a #240 steel grid, center line average roughness Ra = 14.4 µm, maximum height Rmad = 188.3 µm, 10-point average roughness Rz = 148.1 µm) was prepared as the base metal. The sheet and the base metal were superimposed, bonded by roll at a linear pressure of 900 kgf/cm at room temperature, and sintered in the 380°C nitrogen atmosphere for 1 hour, to obtain a laminated sliding material with a lubricating layer of about 0.3 mm in thickness. The laminated sliding material was straightened by rolls again, and subjected to the friction and wear test. The coefficient of the dynamic friction of the laminated sliding material was 0.08, and the wear loss was 35 µm. The wear coefficient was 2.1 x 10⁻⁵ mm/kgf/ cm²·km.

### Example 4

The products of Examples 4 to 7 were each examined for frictional wear be conducting a test under the conditions listed below:
Frictional wear test:
Testing machine: A ring-on-disk vertical frictional wear testing
machine (made by Takachiho Precision Machine Co.);
Testpiece (flat sheet): 30 mm by 30 mm;
Testing member: Of carbon steel S55C, 25.6 mm O.D., 20.0 mm
I.D., 15.0 mm high;
Pressure: 50 kgf/cm²; Speed: 10 m/min.; PV = 500;
Testing time: 20 hours.

4.69 in oven-dry weight of para-aromatic polyamide pulp sold under the tradename Twaron 1094 (product of Nippon Aramide Co. having a BET specific surface area of 12.9 m²/g and a weight-average fiber length of 1.5 mm) and 7.81 g in oven-dry weight of para-aromatic polyamide pulp under the tradename Twaron 1097 (product of Nippon Aramide Co. having a BET specific surface area of 5.7 m²/g and a weight-average fiber length of 1.5 mm) were mixed with 900 g of water in a domestic mixer to prepare a uniform aqueous pulp dispersion. After the addition of 31.25 g of a PTFE dispersion sold under the tradename FLUON Dispersion AD1 (product of Asahi Glass Co., Ltd. having a solid content of 60% with PTFE having a molecular weight of at least 1,000,000 and an average particle diameter of 0.25 µm) to the pulp dispersion, water was added to make a total weight of 1143.5 g, and the whole was thoroughly stirred. Added, then, were 94 g of an aqueous solution containing 0.6% by weight of tannic acid and 0.4 % by weight of aluminum sulfate and 12.5 g of a 1% by weight aqueous solution of sodium aluminate to give the system a tannic acid content of 450 ppm and an aluminum sulfate content of 300 ppm. The dispersion was stirred for 10 minutes to allow the high-molecular PTFE to settle on the surface of the aromatic polyamide pulp to thereby form a slurry composed of the aromatic polyamide pulp and high-molecular PTFE. The slurry was divided into two portions, and they were spread each on a 250 mm square wire net in a square sheet machine (made by Kumagaya Riki Co., Ltd.), dehydrated, and dried to give two sheets each having an aromatic polyamide pulp/fluororesin ratio of 40/60 and a weight of 250 g/m².

A metal base was prepared by blasting 0.8 mm thick rolled steel for general structural use (SS400) with #110 alumina powder to give it a surface having a centerline average roughness Ra of 2.2 µm a maximum roughness Rmax of 25 µm and a 10-point average roughness Rz of 19 µm. One of the above sheets was placed on the base, and they were joined together by rolling under a linear pressure of 650 kgf/cm at room temperature, and heated for an hour in a nitrogen atmosphere having a temperature of 380°C to yield a laminated sliding member having a lubricating thickness of about 0.15 mm.

The laminated sliding member was rolled under a linear pressure of 600 kgf/cm at room temperature, and sintered at 380°C for 10 minutes in a far-infrared heating oven. The laminated sliding member had a dynamic friction coefficient of 0.11, a wear of 2 µm and a wear coefficient of 3.3 x 10⁻⁶ mm/kgf/cm².km.

### Example 5

Two sheets each having an aromatic polyamide pulp/fluororesin ratio of 40/60 and a weight of 250 g/m² were prepared by repeating Example 4. A metal base was prepared by blasting 0.8 mm thick rolled steel for general structural use (SS400) with #110 alumina powder to give it a surface having a centerline average roughness Ra of 2.2 µm, a maximum roughness of Rmax of 25 µm and a 10-point average roughness Rz of 19 µm. One of the above sheets was placed on the base, and they were joined together by rolling under a linear pressure of 650 kgf/cm at room temperature, and sintered for an hour in nitrogen atmosphere having a temperature of 380°C to yield a laminated sliding member having a lubricating layer thickness of about 0.15 mm. The laminated sliding member was sintered at 380°C for 20 minutes in a far-infrared heating oven, and rolled under a linear pressure of 600 kgf/cm. The laminated sliding member had a dynamic friction coefficient of 0.11, a wear of 5 µm and a wear coefficient of 8.3 x 10⁻⁶ mm/kgf/cm².km.

### Example 6

Two sheets each having an aromatic polyamide pulp/fluororesin ratio of 40/60 and a weight of 250 g/m² were prepared by repeating Example 4. A metal base was prepared by blasting 0.8 mm thick rolled steel for general structural use (SS400) with #110 alumina powder to give it a surface having a centerline average roughness Ra of 2.2 µm, a maximum roughness Rmax of 25 µm and a 10-point average roughness Rz of 19 µm. One of the above sheets was placed on the base, and they were joined together by rolling under a linear pressure of 650 kgf/cm at room temperature, and sintered for an hour in a nitrogen atmosphere having a temperature of 380°C to yield a laminated sliding member having a lubricating layer thickness of about 0.15 mm. The laminated sliding member was pressed (by a hot press, NSFA-50 of Jindo Metal Industries) at 350°C and 300 kgf/cm², and allowed to cool to room temperature. The laminated sliding member had a dynamic friction coefficient of 0.12, a wear of 5 µm and a wear coefficient of 8.3 x 10⁻⁶mm/kgf/cm².km.

### Example 7

4.69 g in oven-dry weight of para-aromatic polyamide pulp sold under the tradename Twaron 1094 (product of Nippon Aramide Co. having a BET specific surface area of 12.9 m²/g and a weight-average fiber length of 1.5 mm) and 7.81 g in oven-dry weight of para-aromatic polyamide pulp sold under the tradename Twaron 1097 (product of Nippon Aramide Co. having a BET specific surface area of 5.7 m²/g and a weight-average fiber length of 1.5 mm) were mixed with 900 g of water in a domestic mixer to prepare a uniform aqueous pulp dispersion. After the addition of 31.25 g of a PTFE dispersion sold under the tradename Fluon Dispersion AD1 (product of Asahi Glass Co., Ltd. having a solid content of 60% with PTFE having a molecular weight of at least 1,000,000 and an average particle diameter of 0.25 µm) and 1.56 g of expanded graphite (BSP-5A, product of Chuetsu Graphite having an average particle diameter of 7.8 µm) to the pulp dispersion, water was added to make a total weight of 1143.5 g, and the whole was thoroughly stirred. Added, then, were 94 g of an aqueous solution containing 0.6% by weight of tannic acid and 0.4% by weight of aluminum sulfate and 12.5 g of a 1% by weight aqueous solution of sodium aluminate to give the system a tannic acid content of 450 ppm and an aluminum sulfate content of 300 ppm. The dispersion was stirred for 10 minutes to allow the high-molecular PTFE and expanded graphite to settle on the surface of the aromatic polyamide pulp to thereby form a slurry composed of the aromatic polyamide pulp, high-molecular PTFE and expanded graphite. The slurry was dividend into two portions, and they were spread each on a 250 mm square wire net in a square sheet machine (made by Kumagaya Riki Co., Ltd.), dehydrated, and dried to give two sheets each having an aromatic polyamide pulp/fluororesin/graphite ratio of 40/60/5 and a weight of 263 g/m².

A metal base was prepared by blasting 0.8 mm thick rolled steel for general structural use (SS400) with #110 alumina powder to give it a surface having a centerline average roughness Ra of 2.2 µm, a maximum roughness Rmax of 25 µm and a 10-point average roughness Rz of 19 µm. One of the above sheets was placed on the base, and they were joined together by rolling under a linear pressure of 650 kgf/cm at room temperature, and sintered for an hour in a nitrogen atmosphere having a temperature of 380°C to yield a laminated sliding member having a lubricating layer thickness of about 0.16 mm. The laminated sliding member was rolled again for straightening, and subjected to a frictional wear test. The laminated sliding member had a dynamic friction coefficient of 0.10, a wear of 8 µm and a wear coefficient of 1.3 x10⁻⁵ mm/kgf/cm².km.

### Comparative Example 1

A three-layer bearing produced by Oilless Kogyo (brand: Oilless Dry Met, consisting of a resin sliding layer, a bronze layer, and a steel layer) was subjected to the friction and wear test. The coefficient of the dynamic friction of the sliding material was 0.07, the wear loss was 110 µm.

### Comparative Example 2

This comparative example is according to JP-A-9 188 767 and shows a case where no base metal was used.

A predetermined number of sheets having a composition ratio of aromatic polyamide pulp/fluororesin of 40/60 were prepared as described in Example 1. The sheets were cut to a size of 30 x 30 mm, and 16 such sheets were laminated, pressed at a planar pressure of 1000 kgf/cm², and sintered in the 380°C nitrogen atmosphere for 1 hour, to give a 4.9 mm thick sliding material. The coefficient of the dynamic friction of the sliding material was 0.07 and the wear loss was 130 µm. The wear coefficient was 7.5 x 10⁻⁵ mm/kgf/cm²·km.

### Effect of the invention

The present invention provides a laminated sliding material having a lubricating layer with excellent friction and wear property. The method of the present invention enables a laminated sliding material to be produced using simple equipment and in a simple operation, because the sliding layer of the laminated sliding material can be formed by a conventional general papermaking technique.

## Claims

1. A laminated sliding member comprising a base metal and a lubricating layer containing an aromatic polyamide pulp and a fluororesin bonded to the base metal alloy, wherein the aromatic polyamide pulp has a BET surface area of 3 to 25 m²/g and makes up 10 to 70 wt.% of the lubricating layer, based on the weight of the lubricating layer.

2. The laminated sliding member of claim 1 wherein the lubricating layer containing the aromatic polyamide pulp and the fluororesin is a sheet obtainable by removing the said aromatic polyamide pulp with the fluororesin powder deposited thereon from an aqueous dispersion by a papermaking process.

3. The laminated sliding member of claim 1 or 2 wherein the lubricating layer containing the aromatic polyamide pulp and the fluororesin further comprises 0.5 to 25 wt.% of one or more compounds selected from carbon, molybdenum disulfide, bronze, boron nitride, and fluororesin with molecular weight less than the fluororesin which is the main matrix of the sheet.

4. A process for producing the laminated sliding member of claim 1 comprising the following steps (a) through (c):
(a) destabilizing a fluororesin powder with a coagulant in an aqueous dispersion of an aromatic polyamide pulp and the fluororesin powder, in order to deposit the fluororesin powder on the aromatic polyamide pulp,
(b) removing the aromatic polyamide pulp with the fluororesin powder deposited thereon by means of a papermaking process, followed by drying to form a sheet, and
(c) pressure-bonding the sheet and a base metal, and heating this to a temperature higher than the melting point of the fluororesin.

## Patentansprüche

1. Laminiertes Gleitelement, das ein Grundmetall und eine Schmierschicht umfasst, die eine Pulpe aus aromatischem Polyamid und ein mit der Grundmetall-Legierung verbundenes Fluorharz enthält, bei dem die Pulpe aus aromatischem Polyamid eine BET-Oberfläche von 3 bis 25 m²/g hat und 10 bis 70 Gew.-% bezogen auf das Gewicht der Schmierschicht ausmacht.

2. Laminiertes Gleitelement nach Anspruch 1, bei dem die Schmierschicht, die die Pulpe aus aromatischem Polyamid und das Fluorharz enthält, eine Folie ist, die durch Abtrennen der Pulpe aus aromatischem Polyamid mit dem darauf niedergeschlagenen Fluorharzpulver aus einer wässrigen Dispersion mittels eines Papierherstellungsverfahrens erhalten werden kann.

3. Laminiertes Gleitelement nach Anspruch 1 oder 2, bei dem die Schmierschicht, die die Pulpe aus aromatischem Polyamid und das Fluorharz enthält, des Weiteren 0,5 bis 25 Gew.-% einer oder mehrerer Verbindungen umfasst, ausgewählt aus der Gruppe von Kohlenstoff, Molybdändisulfid, Bronze, Bornitrid und Fluorharz, letzteres mit einem Molekulargewicht, das geringer ist als das des Fluorharzes, welches die Hauptmatrix der Folie darstellt.

4. Verfahren zur Herstellung des laminierten Gleitelements nach Anspruch 1, welches die folgenden Schritte (a) bis (c) umfasst:
(a) Destabilisieren eines Fluorharzpulvers mit Hilfe eines Koagulationsmittels in einer wässrigen Dispersion einer Pulpe aus aromatischem Polyamid und dem Fluorharzpulver, um das Fluorharzpulver auf der Pulpe aus aromatischem Polyamid niederzuschlagen,
(b) Abtrennen der Pulpe aus aromatischem Polyamid mit dem darauf niedergeschlagenen Fluorharzpulver mittels eines Papierherstellungsverfahrens und anschließendes Trocknen zur Bildung einer Folie, und
(c) Druckbinden der Folie und eines Grundmetalls und deren Erhitzen auf eine Temperatur oberhalb des Schmelzpunktes des Fluorharzes.

## Revendications

1. Elément stratifié coulissant comprenant un élément métallique de base et une couche de lubrification contenant de la pulpe de polyamide aromatique et une résine fluorée, liée à l'alliage métallique de basé, dans lequel la pulpe de polyamide aromatique a une surface spécifique, mesurée selon la méthode B.E.T, comprise entre 3 et 25 m²/g et représente de 10 à 70 % du poids total de la couche de lubrification.

2. Elément stratifié coulissant selon la revendication 1, dans lequel la couche de lubrification contenant la pulpe de polyamide aromatique et la résine fluorée est une feuille que l'on peut obtenir en déposant ladite pulpe de polyamide aromatique avec la couche de résine fluorée déposée sur celle-ci à partir d'une dispersion aqueuse selon un procédé de fabrication de papier.

3. Elément stratifié coulissant selon la revendication 1 ou 2 dans lequel la couche de lubrification contenant la pulpe de polyamide aromatique et la résine fluorée comprend en outre de 0,5 à 25 % en poids d'un ou de plusieurs composés choisis parmi le carbone, le disulfure de molybdène, le bronze, le nitrure de bore et une résine fluorée ayant une masse moléculaire inférieure à celle formant la matrice principale de la feuille.

4. Procédé de fabrication de l'élément coulissant selon la revendication 1, comprenant les étapes (a) à (c) suivantes :
(a) déstabilisation d'une poudre de résine fluorée à l'aide d'un agent coagulant dans une dispersion aqueuse contenant la pulpe de polyamide aromatique et la poudre de résine fluorée, afin de déposer la poudre de résine fluorée sur la pulpe de polyamide aromatique,
(b) dépôt selon un procédé de fabrication de papier, de la pulpe de polyamide aromatique sur laquelle a été déposée la poudre de résine fluorée, puis séchage aboutissant à la formation d'une feuille, et
(c) fixation, par application de pression, de la feuille sur un élément métallique de base et chauffage de l'ensemble jusqu'à une température supérieure au point de fusion de la résine fluorée.
